# EUROPEAN PATENT SPECIFICATION

(11) **EP 1 378 835 B1**
(45) Date of publication and mention of the grant of the patent: **30.12.2015**
(21) Application number: 03014511.4
(22) Date of filing: 03.07.2003
(51) Int. Cl.: G06F 11/36

(54) **Process and system for comfortable debugging of computer programs**
Prozess und Vorrichtung zur Komfortfehlerbeseitigung von Rechnerprogrammen
Procédé et dispositif pour le débogage confortable de programmes informatiques

(30) Priority: 04.07.2002 EP 02014789
(43) Date of publication of application: 07.01.2004
(73) Proprietor: SAP SE, 69190 Walldorf (DE)
(72) Inventor: Jentsch, Frank, 69242 Mühlhausen (DE); Wagenführer, Ralph, 67227 Frankenthal (DE)
(74) Representative: Richardt Patentanwälte PartG mbB

(56) References cited:
- EP-A- 0 965 921
- US-A- 5 815 714
- US-A- 5 931 956
- US-A- 6 077 312
- US-A1- 2002 029 374
- JONATHAN B ROSENBERG ED - ROSENBERG J B: "How debuggers work - CHAPTER 2" HOW DEBUGGERS WORK. ALGORITHMS, DATA STRUCTURES, AND ARCHITECTURE, NEW YORK, JOHN WILEY & SONS, US, 1 January 1996 (1996-01-01), pages 21-37, XP007902087 ISBN: 978-0-471-14966-8

## Description

### Background of the Invention

### Field of the Invention.

The technical field of this invention is in the area of electronic data processing. More particularly, the invention relates to methods, computer program products and systems for debugging a program code.

### Description of the Related Art

When developing a computer program, debugging of the program code is often a difficult and time consuming work. Debugging is often performed in the following manner: finding the program part which causes problems, finding the relevant lines of the program code, setting of breakpoints a places in the program code, which are of interest regarding the status of certain variables, and executing the program code with a debugging software (debugger). When executing the debugger, the run-time environment of the program developing environment starts executing the program code, stops its execution at the first breakpoint in the order of the execution and usually displays the content of variables for analysis. A failure in the program code (bug) needs not necessarily be present. The debugger can be used to only show the content of certain variables as well.

This procedure has certain disadvantages. The performance of the first three steps mentioned above is a lot of workload if the debugging has to be frequently repeated. Program developers and coworkers, who have to maintain the program, need a good understanding of the total program code, although only part of the code might be interesting for the debugging purpose. Another point is that the breakpoints are automatically deleted when closing the program and are not held in memory. So, when starting the debugging software anew in a new session, the breakpoints have to be set again, in order to reintroduce them into computer memory.

Thus, there is a need for a method and/or debugging system providing a more efficient solution of the problems described above.

Jonathan B Rosenberg ED - Rosenberg J B: "How debuggers work" - CHAPTER 2 (algorithms, data structures, and architecture), New York, John Wiley & Sons, US, 1 January 1996 (1996-01-01), pages 21-37, XP007902087, ISBN: 978-0-471-14966-8 discloses an overview on algorithms, data structures, architecture and inner workings of the most commonly used type of debuggers: symbolic, graphical user-interface based and application-oriented debuggers.

### Summary of the Invention

In accordance with the invention, as embodied and broadly described herein, methods and systems consistent with the principles described herein provide for debugging computer program code by means of a debugging software, which provides software means for causing the debugging software to stop at a breakpoint set in said computer program code, comprising making the stop of the debugging software dependent on one or more predefinable conditions.

In one aspect, the invention according to claim 1 provides a method for debugging computer program code by means of a debugging software.

In accordance with another aspect, the invention according to claim 8 provides a computer system for debugging computer program code by means of a debugging software.

Embodiments of the invention are further directed to a computer readable medium, a computer program and a computer data signal comprising instructions for debugging program code according to the method as described above. The invention is further directed to a computer readable data structure containing breakpoints according to the inventive concept.

Additional objects and advantages of the invention and its embodiments will be set forth in part in the description, or may be learned by practice of the invention. Objects and advantages will be realized and attained by means of the elements and combinations particularly pointed out in the appended claims. Preferred embodiments and implementations of the invention are disclosed in the detailed description section and in the dependent claims.

It is understood that both the foregoing general description and the following detailed description are exemplary and explanatory only and are not restrictive of the invention and its embodiments.

### Brief Description of the Drawings

The accompanying drawings, which are incorporated in and constitute a part of this specification, illustrate implementations of the invention and its embodiments and, together with the description, explain the principles of the invention. In the drawings,
Fig. 1 is an exemplary computer system for implementing the present invention;
Fig. 2 shows a schematic representation of an exemplary screen mask to activate or deactivate breakpoints.

### Detailed description

Reference will now be made in detail to the principles of the invention and its embodiments, examples of which are illustrated in the accompanying drawings. Examples, mentioned therein, are intended to explain the invention and not to limit the invention in any kind.

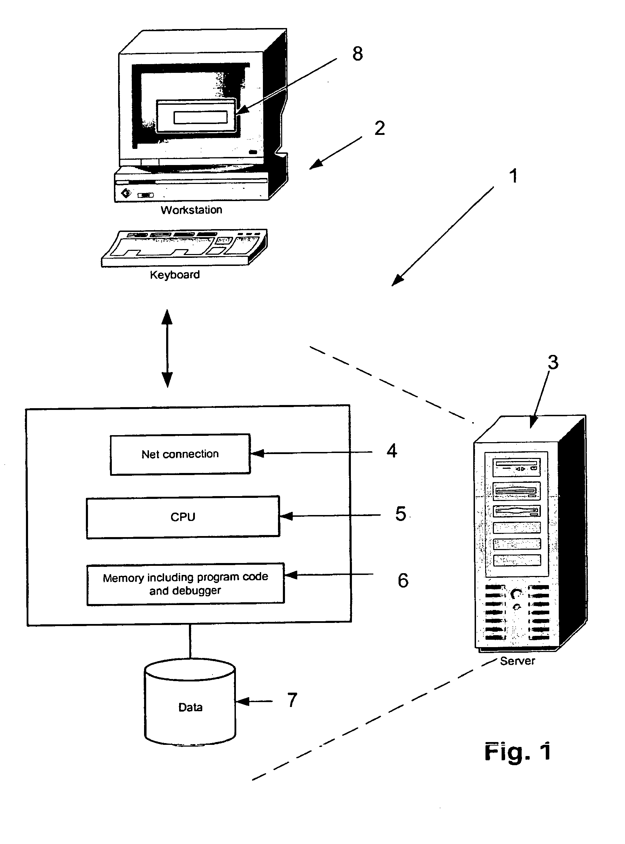

Within the scope of this description, the terms of the invention used in this specification have the meaning that is usual in programming languages like C, C++, JAVA, ABAP, ABAP Objects. The following explanations are made with reference to the figures 1 to 2.

Particularly, a breakpoint or a breakpoint instruction, both terms being used herein alternatively, is any software means, which causes a debugging software to stop a that point of the program code, at which the breakpoint or breakpoint instruction is set. Debugging a program code means, within the scope of this invention, to execute a program code by means of a debugging software. Whether the program code contains failures (bugs) or not is irrelevant. A breakpoint according to the invention and its embodiments can be implemented in a program code by a macro call. A macro thereby is a abbreviation of a program coding containing the breakpoint Instruction. In the macro, the breakpoint is included in a conditional instruction having one or more conditions, which must be fulfilled, if the breakpoint instruction can be executed by the run-time environment. By this method, a type of breakpoints can be defined. Each type of breakpoint is characterised by a particular set of conditions. The implementation by a macro is not inevitably necessary. However, it reduces the programming effort considerably.

A condition (abbreviated as "cond") can be any type of logical comparison of data known to the skilled artisan. Two or more conditions can be combined by logical connections "AND", "OR" and/or "XOR" as may be appropriate in the respective case.

The conditions can be structured such that in all macros of a given program an identical condition has to be fulfilled. In this case the identical condition works like a main switch. Further in different macros, additional to such a general condition, additional second, third, fourth or more conditions can be implemented. Structures mixed with "AND", "OR" and/or "XOR" connections are also possible.

The macros can be stored in one or more separate data structures like tables, arrays or files, which can be included into the program code by include instructions in the definition part of the program. This procedure is a possibility to make the breakpoints persistent with respect to the closing of the program.

Advantageously, different macros can be defined using different sets of conditions, thereby creating different types of breakpoints. The different sets of one or more conditions can be stored in one or more data structures like arrays or in one or more tables or files in volatile and/or non volatile memory. Such data structure can be made accessible for only one type of macro. The set or sets of conditions can be edited during the debugging procedure. This allows, by setting or deactivating software switches, that all or only certain types of breakpoints which have one common condition included in the respective macros, can be activated or deactivated by a single action. This can be implemented e.g. by a screen mask, in which a software switch can be activated or deactivated by a mouse click or a key stroke. The screen mask within this concept is a graphical user interface, by means of which reading and writing access is provided to the array, in which the one or more conditions are stored.

A further preferred implementation is a macro, in which one of the conditions is, whether a string variable handed over by the macro is identical to a respective variable stored in the arrays or tables mentioned above. In this case, a query is started to check, whether a preset string is equal to a string given in the macro.

A preferred implementation of a type of breakpoints can be, for example, a macro, in which the at least one condition is realized by the classical "if" instruction. This is pointed out in more detail in the following example. Alternatively, "case" or "select case" or similar instructions may be used as well.
MACRO_1:
IF cond0 = TRUE AND cond1 = TRUE THEN
BREAKPOINT
ENDIF

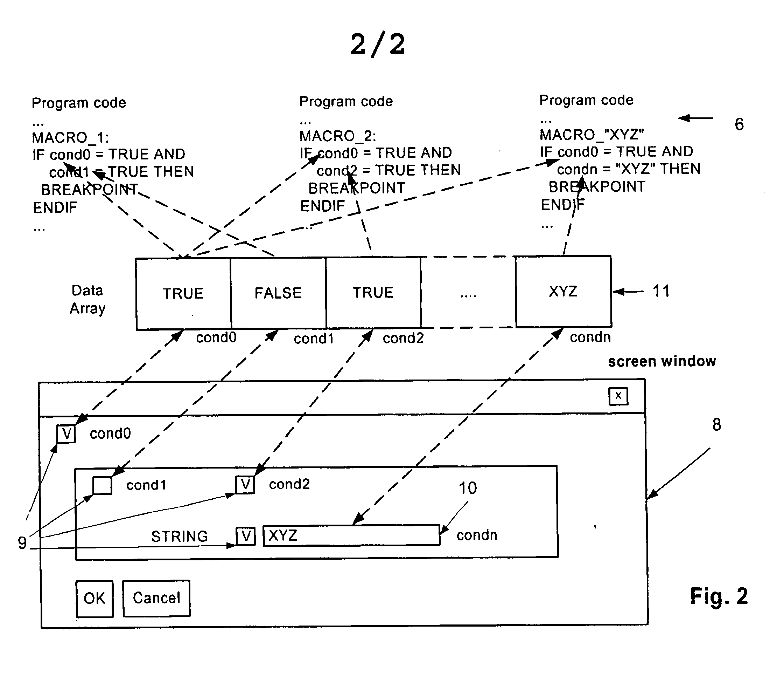

An example of an embodiment by using a breakpoint of the latter type and a screen mask is shown by the schematic drawings in figures 1 and 2:
Fig. 1 shows a computer system 1 for allowing a user to debug program code by means of a debugger according to the principles as described herein. Computer system 1 comprises a server 3 with a central processing unit 5, a net connection 4 for connection with at least one input/output means 2 including screen and keyboard, at least one data storage means 7 and memory 6 including program code and debugging software. On the screen, a screen mask like a window 8 for providing read and write access to the storage means 7 is shown. In Fig. 2 the invention is described in more detail. In a program code 6 three types of macros including an if-instruction and a breakpoint instruction are inserted (breakpoint). The three types of breakpoints are named Macro_1, Macro_2 and Macro_"XYZ". In each breakpoint, a different set of conditions has to be fulfilled, if the debugger shall be caused to stop at the respective breakpoint: In Macro_1 cond0 and cond1, in Macro_2 cond0 and cond2, and in Macro_3 cond0 and condn have to be fulfilled. Whether a condition is fulfilled or not can be decided by the contents of the respective fields of a data array 11, where respective fields are allocated to respective conditions. In the example in Fig. 2, fields named cond"i" with i from 1 to n are allocated to the conditions of the same name. In the example cond0 reads as: if the content of field cond0 in the Data Array is TRUE (i.e. contains the boolean value TRUE), then cond0 is fulfilled. Condn reads as: if the content of field condn of the Data Array is equal to "XYZ" (i.e. contains the string "XYZ"), then condn is fulfilled.
As indicated in Fig. 2, the fields of the data array can be accessed by read and write operations by a user via a graphical user interface like the window 8, which provides means for editing data like. A user can set a field in the data array to TRUE or FALSE (boolean variable) by clicking with a mouse on boxes 9 named according to the conditions they refer to. A "V" indicates that the content of the respective field in the data array 11 has the content TRUE. A blank indicates that the content of the respective field in the data array 11 has the content FALSE. The string for condn can be edited via a keyboard in a screen field 10. The screen window 8 can have additional usual attributes like OK button to save in storage and Cancel to escape without save. As can be deduced from Fig. 2, cond0 is a general condition, which allows to completely deactivate all macros in the program by one click. In the example of Fig. 3, the breakpoint instruction only in Macro_2 and Macro_"XYZ" will be executed, what means that the debugger will stop a the respective places, where the macros are incorporated in the program code.

The invention is of a general nature and can be used debugging software in programming languages or rather programming environments, which support a statement to define a breakpoint, such as FORTRAN, PASCAL, C, C++, ABAP, ABAP Objects or Visual Basic. A technical advantage of the breakpoints according to the inventive concept is that such breakpoints, when set in a program code, are persistent even if the debugging session is closed.

Computer programs based on the written description of this invention are within the skill of an experienced developer.

The invention and its embodiments can be implemented in digital electronic circuitry, or in computer hardware, firmware, software, or in combinations of them. The invention can be implemented as a computer program product, i.e., a computer program, in which predefined breakpoints and/or a screen mask are available, tangibly embodied in an information carrier, e.g., in a machine-readable storage device or in a propagated signal, for execution by, or to control the operation of, data processing apparatus, e.g., a programmable processor, a computer, or multiple computers. The computer program code can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention and its embodiments can be performed by one or more programmable processors executing a computer program to perform functions of the invention by operating on input data and generating output.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or haptic feedback; and input from the user can be received in any form, including acoustic, speech, or haptic input.

Modifications and adaptations of the present invention will be apparent to those skilled in the art from consideration of the specification and practice of the invention disclosed herein. The foregoing description of an implementation of the invention has been presented for purposes of illustration and description. It is not exhaustive and does not limit the invention to the precise form disclosed. Modifications and variations are possible in light of the above teachings or may be acquired from the practicing of the invention. For example, the described implementation includes software, but systems and methods consistent with the present invention may be implemented as a combination of hardware and software or in hardware alone. Additionally, although aspects of the present invention are described for being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM. It is intended that the specification and examples be considered as exemplary only, with a true scope of the invention being indicated by the following claims.

## Claims

1. A method for debugging computer program code by means of a debugging software, the method providing software means for causing the debugging software to stop at a breakpoint set in said computer program code; the method comprising:
-- debugging a program code having multiple types of breakpoints,
• wherein each type of breakpoint is **characterized by** a particular set of one or more predefinable conditions which must be fulfilled for executing the breakpoint by a run-time environment, and the one or more predefinable conditions characterizing a breakpoint type are identical for said type of breakpoint,
• wherein the predefinable conditions of all the sets of conditions are stored in a data array, wherein respective fields of said array are allocated to respective ones of the conditions, and wherein the contents of a respective field of said data array determines whether the respective condition is fulfilled or not, and
• wherein the stop of the debugging software at each type of breakpoint is made dependent on its set of predefinable conditions;
the method further comprising:
-- activating or deactivating all breakpoints of one or more types in response to a single action,
• wherein the single action is an interaction of a user with a graphical user interface, the user interface providing reading and writing access to the array, and
• wherein performing the single action implies executing a write access via said user interface on a field of said data array.

2. The method of claim 1, wherein the data array is accessible for only one type of breakpoints.

3. The method of one of claims 1 to 2, wherein
-- the one or more predefinable conditions of each of said sets are changeable during the debugging process.

4. The method one of claims 1 to 3,wherein
-- the data array isstored in a non volatile storage.

5. The method of one of claims 1 to 4, wherein
-- a breakpoint is set by setting a macro call, comprising said breakpoint, wherein a macro is a program coding containing a breakpoint instruction, wherein in said macro said breakpoint is included in a conditional instruction having one or more conditions which must be fulfilled for executing the breakpoint instruction by the run-time environment.

6. The method as claimed in any of claims 1-5, wherein
-- the data array is editable by means of a screen mask.

7. The method as claimed in any of claims 1 to 6, wherein
-- the data array is a table.

8. A computer system for debugging computer program code by means of a debugging software, the system providing software means for causing the debugging software to stop at a breakpoint set in said computer program code; the system comprising:
- a memory having program instructions stored therein;
- an input means for entering data;
- a storage means for storing data; and
- a processor responsive to the stored program instructions to:
-- debug a program code having multiple types of breakpoints,
• wherein each type of breakpoint is **characterized by** a particular set of one or more predefinable conditions which must be fulfilled for executing the breakpoint by a run-time environment, and the one or more predefinable conditions characterizing a breakpoint are identical for each type of breakpoint,
• wherein the predefinable conditions of all the sets of conditions are stored in a data array, wherein respective fields of said array are allocated to respective ones of the conditions, and wherein the contents of a respective field of said data array determines whether the respective condition is fulfilled or not, and
• wherein the stop of the debugging software at each type of breakpoint is made dependent on its set of predefinable conditions; and to:
-- activate or deactivate all breakpoints of one or more types in response to a single action,
• wherein the single action is an interaction of a user with a graphical user interface, the user interface providing reading and writing access to the array, and
• wherein performing the single action implies executing a write access via said user interface on a field of said data array.

9. The computer system of claim 8, wherein the data array is accessible for only one type of breakpoints.

10. The computer system as claimed in any of claims 8 to 9, wherein
-- the one or more predefinable conditions are changeable during the debugging process.

11. The computer system as claimed in claim 8 to 11, wherein the data array is stored in a non volatile storage.

12. The computer system as claimed in any of claims 8 to 11, wherein
-- a breakpoint is set by setting a macro call, comprising said breakpoint, wherein a macro is a program coding containing a breakpoint instruction, wherein in said macro said breakpoint is included in a conditional instruction having one or more conditions which must be fulfilled for executing the breakpoint instruction by the run-time environment.

13. The computer system as claimed in any of claims 8 to 12, wherein
-- the data array is editable by means of a screen mask.

14. The computer system as claimed in any of claims 8 to 13, wherein
-- the data array is a table.

15. A computer program comprising instructions for debugging computer program code by means of a debugging software, said instructions when executed on a computer performing the method of any of claims 1 to 7.

16. A computer readable medium on which is recorded a computer program according to claim 15.

17. A computer data signal embodied in a carrier wave comprising:
computer executable instructions which when executed on a computer cause the computer to perform the method of any of claims 1 to 7.

18. Computer readable data structure comprising one or more breakpoints set in computer program code according to claim 1.

## Patentansprüche

1. Verfahren zum Debuggen von Computerprogrammcode mithilfe einer Debugging-Software, wobei das Verfahren Softwaremittel zum Veranlassen bereitstellt, dass die Debugging-Software an einem Breakpoint-Satz in dem genannten Computerprogrammcode stoppt; wobei das Verfahren aufweist:
-- Debugging eines Programmcodes, der mehrere Breakpoint-Typen hat,
• wobei jeder Breakpoint-Typ von einem besonderen Satz einer oder mehr vordefinierbarer Bedingungen gekennzeichnet wird, die für die Ausführung des Breakpoints durch eine Runtime-Umgebung erfüllt werden müssen, und die eine oder mehr vordefinierbaren Bedingungen, die einen Breakpoint-Typ kennzeichnen, für den genannten Breakpoint-Typ identisch sind,
• wobei die vordefinierbaren Bedingungen aller Bedingungssätze in einem Datenarray gespeichert werden, wobei jeweilige Felder des genannten Arrays jeweiligen der Bedingungen zugewiesen werden und wobei der Inhalt eines jeweiligen Felds des genannten Datenarrays bestimmt, ob die jeweilige Bedingung erfüllt ist oder nicht, und
• wobei das Stoppen der Debugging-Software an jedem Breakpoint-Typ in Abhängigkeit von seinem Satz definierbarer Bedingungen erfolgt;
wobei das Verfahren ferner **gekennzeichnet ist durch**:
-- Aktivieren oder Deaktivieren aller Breakpoints von einem oder mehr Typen als Reaktion auf eine einzelne Aktion:
• wobei die einzelne Aktion eine Interaktion eines Benutzers mit einer grafischen Benutzeroberfläche ist, wobei die Benutzeroberfläche Lese- und Schreibzugriff auf das Array bereitstellt, und
• wobei das Durchführen der einzelnen Aktion das Ausführen eines Schreibzugriffs über die genannte Benutzeroberfläche auf ein Feld des genannten Datenarrays beinhaltet.

2. Verfahren nach Anspruch 1, wobei das Datenarray nur für einen Typ von Breakpoint zugänglich ist.

3. Verfahren nach Anspruch 1 oder 2, wobei
-- die eine oder mehr vordefinierbaren Bedingungen von jedem der genannten Sätze während des Debugging-Prozesses veränderbar sind.

4. Verfahren nach einem der Ansprüche 1 bis 3, wobei
-- das Datenarray in einem nichtflüchtigen Speicher gespeichert wird.

5. Verfahren nach einem der Ansprüche 1 bis 4, wobei
-- ein Breakpoint durch Setzen eines Makro-Aufrufs gesetzt wird, der den genannten Breakpoint aufweist, wobei ein Makro eine Programmcodierung ist, die eine Breakpoint-Anweisung enthält, wobei in dem genannten Maktro der genannte Breakpoint in einer bedingten Anweisung eingeschlossen ist, die eine oder mehr Bedingungen hat, die zum Ausführen der Breakpoint-Anweisung durch die Laufzeitumgebung erfüllt werden muss.

6. Verfahren nach einem der Ansprüche 1 bis 5, wobei
-- das Datenarray mithilfe einer Bildschirmmaske bearbeitet werden kann.

7. Verfahren nach einem der Ansprüche 1 bis 6, wobei
-- das Datenarray eine Tabelle ist.

8. Computersystem für das Debugging von Computerprogrammcode mithilfe einer Debugging-Software, wobei das System Softwaremittel zum Veranlassen bereitstellt, dass die Debugging-Software an einem Breakpoint-Satz in dem genannten Computerprogrammcode stoppt; wobei das System aufweist:
- einen Arbeitsspeicher, in dem Programmanweisungen gespeichert werden;
- eine Eingabeeinrichtung zum Eingeben von Daten;
- eine Speichereinrichtung zum Speichern von Daten und
- einen Prozessor, der auf die gespeicherten Programmanweisungen anspricht zum:
-- Debugging eines Programmcodes, der mehrere Breakpoint-Typen hat,
• wobei jeder Breakpoint-Typ von einem besonderen Satz einer oder mehr vordefinierbarer Bedingungen gekennzeichnet wird, die für die Ausführung des Breakpoints durch eine Runtime-Umgebung erfüllt werden müssen, und die eine oder mehr vordefinierbaren Bedingungen, die einen Breakpoint-Typ kennzeichnen, für jeden Breakpoint-Typ identisch sind,
• wobei die vordefinierbaren Bedingungen aller Bedingungssätze in einem Datenarray gespeichert werden, wobei jeweilige Felder des genannten Arrays jeweiligen der Bedingungen zugewiesen werden und wobei der Inhalt eines jeweiligen Felds des genannten Datenarrays bestimmt, ob die jeweilige Bedingung erfüllt ist oder nicht, und
• wobei das Stoppen der Debugging-Software an jedem Breakpoint-Typ in Abhängigkeit von seinem Satz definierbarer Bedingungen erfolgt; und zum:
-- Aktivieren oder Deaktivieren aller Breakpoints von einem oder mehr Typen als Reaktion auf eine einzelne Aktion:
• wobei die einzelne Aktion eine Interaktion eines Benutzers mit einer grafischen Benutzeroberfläche ist, wobei die Benutzeroberfläche Lese- und Schreibzugriff auf das Array bereitstellt, und
• wobei das Durchführen der einzelnen Aktion das Ausführen eines Schreibzugriffs über die genannte Benutzeroberfläche auf ein Feld des genannten Datenarrays beinhaltet.

9. Computersystem nach Anspruch 8, wobei das Datenarray nur für einen Typ von Breakpoint zugänglich ist.

10. Computersystem nach Anspruch 8 oder 9, wobei
-- die eine oder mehr vordefinierbaren Bedingungen während des Debugging-Prozesses veränderbar sind.

11. Computersystem nach einem der Ansprüche 8 bis 11, wobei das Datenarray in einem nichtflüchtigen Speicher gespeichert wird.

12. Computersystem nach einem der Ansprüche 8 bis 11, wobei
-- ein Breakpoint durch Setzen eines Makro-Aufrufs gesetzt wird, der den genannten Breakpoint aufweist, wobei ein Makro eine Programmcodierung ist, die eine Breakpoint-Anweisung enthält, wobei in dem genannten Maktro der genannte Breakpoint in einer bedingten Anweisung eingeschlossen ist, die eine oder mehr Bedingungen hat, die zum Ausführen der Breakpoint-Anweisung durch die Laufzeitumgebung erfüllt werden muss.

13. Computersystem nach einem der Ansprüche 8 bis 12, wobei
- das Datenarray mithilfe einer Bildschirmmaske bearbeitet werden kann.

14. Computersystem nach einem der Ansprüche 8 bis 13, wobei
- das Datenarray eine Tabelle ist.

15. Computerprogramm, das Anweisungen für das Debugging von Computerprogrammcode mithilfe einer Debugging-Software aufweist, wobei die genannten Anweisungen bei Ausführung in einem Computer das Verfahren nach einem der Ansprüche 1 bis 7 durchführen.

16. Computerlesbares Medium, auf dem ein Computerprogramm nach Anspruch 15 aufgezeichnet ist.

17. Computerdatensignal, das in einer Trägerwelle ausgestaltet ist, umfassend:
durch einen Computer ausführbare Anweisungen, die bei Ausführung in dem Computer den Computer zum Durchführen des Verfahrens nach einem der Ansprüche 1 bis 7 veranlassen.

18. Computerlesbare Datenstruktur, die einen oder mehr in Computerprogrammcode gesetzte Breakpoints nach Anspruch 1 aufweist.

## Revendications

1. Procédé pour le débogage d'un code de programme informatique au moyen d'un logiciel de débogage, le procédé procurant des moyens logiciels pour amener le logiciel de débogage à s'arrêter à un point d'arrêt placé dans ledit code de programme informatique ; le procédé comprenant :
-- un débogage d'un code de programme ayant de multiples types de points d'arrêt,
• dans lequel chaque type de point d'arrêt est **caractérisé par** un ensemble particulier d'une ou de plusieurs conditions pouvant être prédéfinies qui doivent être remplies pour l'exécution du point d'arrêt par un environnement d'exécution, et la ou les plusieurs conditions pouvant être prédéfinies caractérisant un type de point d'arrêt sont identiques pour ledit type de point d'arrêt,
• dans lequel les conditions pouvant être prédéfinies parmi tous les ensembles de conditions sont stockées dans une matrice de données, dans lequel les champs respectifs de ladite matrice sont alloués aux ensembles respectifs des conditions, et dans lequel le contenu d'un champ respectif de ladite matrice de données détermine si la condition respective est remplie ou non, et
• dans lequel l'arrêt du logiciel de débogage à chacun des types de point d'arrêt est réalisé en fonction de l'ensemble de ses conditions pouvant être prédéfinies ;
le procédé comprenant en outre :
- une activation ou une désactivation de tous les points d'arrêt d'un ou de plusieurs types en réponse à une action simple,
• dans lequel l'action simple est l'interaction d'un utilisateur avec une interface utilisateur graphique, l'interface utilisateur permettant l'accès à la lecture et à l'écriture sur la matrice, et
• dans lequel la réalisation de l'action simple implique l'exécution d'un accès à l'écriture via ladite interface utilisateur sur un champ de ladite matrice des données.

2. Procédé selon la revendication 1, dans lequel la matrice des données est accessible pour uniquement un type de points d'arrêt.

3. Procédé selon l'une quelconque des revendications 1 à 2, dans lequel
-- la ou les plusieurs conditions pouvant être prédéfinies de chacun desdits ensembles peuvent être changées au cours du processus de débogage.

4. Procédé selon l'une quelconque des revendications 1 à 3, dans lequel
-- la matrice des données est stockée dans un stockage non volatil.

5. Procédé selon l'une quelconque des revendications 1 à 4, dans lequel
-- un point d'arrêt est défini en établissant un appel de macro, comprenant ledit point d'arrêt, dans lequel la macro est un codage du programme contenant une instruction de point d'arrêt, dans lequel, dans ladite macro, ledit point d'arrêt est inclus dans une instruction conditionnelle ayant une ou plusieurs conditions qui doivent être remplies pour exécuter l'instruction de point d'arrêt par l'environnement d'exécution.

6. Procédé tel que revendiqué selon l'une quelconque des revendications 1 à 5, dans lequel
-- la matrice des données peut être éditée au moyen d'une fenêtre d'écran.

7. Procédé tel que revendiqué selon l'une quelconque des revendications 1 à 6, dans lequel
-- la matrice des données est un tableau.

8. Système informatique destiné au débogage d'un code de programme informatique au moyen d'un logiciel de débogage, le système procurant des moyens logiciels pour amener le logiciel de débogage à s'arrêter à un point d'arrêt situé dans ledit code de programme informatique, le système comprenant :
- une mémoire ayant des instructions de programme y étant stockées ;
- des moyens de saisie pour entrer des données ;
- des moyens de stockage pour stocker des données ; et
- un processeur pour répondre aux instructions stockées du programme afin de
-- déboguer un code du programme ayant de multiples types de points d'arrêt,
• dans lequel chacun des types de point d'arrêt est **caractérisé par** un ensemble particulier d'une ou de plusieurs conditions pouvant être prédéfinies qui doivent être remplies pour exécuter le point d'arrêt par un environnement d'exécution, et la ou les plusieurs conditions pouvant être prédéfinies caractérisant un point d'arrêt sont identiques pour chacun des types de point d'arrêt,
• dans lequel les conditions pouvant être prédéfinies de tous les ensembles de conditions sont stockées dans la matrice des données, dans lequel les champs respectifs de ladite matrice sont alloués aux ensembles respectifs des conditions, et dans lequel le contenu d'un champ respectif de ladite matrice des données détermine si la condition respective est remplie ou non, et
• dans lequel l'arrêt du logiciel de débogage à chacun des types de point d'arrêt est réalisé en fonction de l'ensemble de ses conditions pouvant être prédéfinies ; et pour :
-- activer ou désactiver tous les points d'arrêt d'un ou de plusieurs types en réponse à une action simple,
• dans lequel l'action simple est l'interaction d'un utilisateur avec une interface utilisateur graphique, l'interface utilisateur permettant l'accès à la lecture et à l'écriture sur la matrice, et
• dans lequel la réalisation de l'action simple implique l'exécution d'un accès à l'écriture via ladite interface utilisateur sur un champ de ladite matrice des données.

9. Système informatique selon la revendication 8, dans lequel la matrice des données est accessible pour uniquement un type de points d'arrêt.

10. Système informatique tel que revendiqué selon l'une quelconque des revendications 8 à 9, dans lequel
-- la ou les plusieurs conditions pouvant être prédéfinies peuvent être changées au cours du processus de débogage.

11. Système informatique tel que revendiqué dans les revendications 8 à 11, dans lequel la matrice des données est stockée dans un stockage non volatil.

12. Système informatique tel que revendiqué selon l'une quelconque des revendications 8 à 11, dans lequel
-- un point d'arrêt est défini en établissant un appel de macro, comprenant ledit point d'arrêt, dans lequel la macro est un codage du programme contenant une instruction de point d'arrêt, dans lequel, dans ladite macro, ledit point d'arrêt est inclus dans une instruction conditionnelle ayant une ou plusieurs conditions qui doivent être remplies pour exécuter l'instruction de point d'arrêt par l'environnement d'exécution.

13. Système informatique tel que revendiqué selon l'une quelconque des revendications 8 à 12, dans lequel
-- la matrice des données peut être éditée au moyen d'une fenêtre d'écran.

14. Système informatique tel que revendiqué selon l'une quelconque des revendications 8 à 13, dans lequel
-- la matrice des données est un tableau.

15. Support lisible par ordinateur, le programme comprenant des instructions pour déboguer le code du programme informatique au moyen d'un logiciel de débogage, lesdites instructions, lorsqu'elles sont exécutées par l'ordinateur, réalisant le procédé selon l'une quelconque des revendications 1 à 7.

16. Support lisible par un programme informatique sur lequel est enregistré un programme informatique selon la revendication 15.

17. Signal de données informatiques incluses dans une onde porteuse comprenant :
les instructions pouvant être exécutées par ordinateur qui, lorsqu'elles sont exécutées par l'ordinateur, amènent l'ordinateur à exécuter le procédé selon l'une quelconque des revendications 1 à 7.

18. Structure de données lisible par ordinateur comprenant un ou plusieurs points d'arrêt présents dans le code du programme informatique selon la revendication 1.
